# EUROPEAN PATENT SPECIFICATION

(11) **EP 1 847 633 B1**
(45) Date of publication and mention of the grant of the patent: **22.08.2018**
(21) Application number: 06713082.3
(22) Date of filing: 31.01.2006
(51) Int. Cl.: C23C 22/48, C23C 22/34, C23C 22/08, C23C 22/44, C23C 22/53, C23C 22/42, C23C 22/20, C23C 22/56, C09D 5/08, C09D 183/14, C23C 22/36, C23C 22/74

(54) **AQUEOUS SURFACE TREATING AGENT FOR METAL MATERIAL, SURFACE TREATING METHOD AND SURFACE-TREATED METAL MATERIAL**
WÄSSRIGES OBERFLÄCHENBEHANDLUNGSMITTEL FÜR METALLMATERIAL, OBERFLÄCHENBEHANDLUNGSVERFAHREN UND OBERFLÄCHENBEHANDELTES METALLMATERIAL
AGENT AQUEUX DE TRAITEMENT DE SURFACE POUR UNE MATIERE EN METAL, PROCEDE DE TRAITEMENT DE SURFACE ET MATIERE EN METAL TRAITEE EN SURFACE

(30) Priority: 02.02.2005 JP 2005027025
(43) Date of publication of application: 24.10.2007
(73) Proprietor: NIHON PARKERIZING CO., LTD., Chuo-ku, Tokyo 103-0027 (JP)
(72) Inventor: YAMAGUCHI, Hidehiro, 1-chome, Chuo-ku, Tokyo, 1030027 (JP); NOMURA, Shinji, 1-chome, Chuo-ku, Tokyo, 1030027 (JP); IWASAKI, Yoshihiro, 1-chome, Chuo-ku, Tokyo, 1030027 (JP)
(74) Representative: Hoffmann Eitle
(86) International application number: PCT/JP2006/301939
(87) International publication number: WO 2006/082951

(56) References cited:
- EP-A1- 0 949 353
- WO-A1-01/12876
- WO-A1-95/21277
- WO-A1-2004/076718
- JP-A- 2003 105 562
- US-A- 5 206 285

## Description

### TECHNICAL FIELD

This invention relates to an aqueous surface-treating agent for metallic materials used to form on the surfaces of sheet coils and moldings made of a metal a coating having together not only excellent corrosion resistance and adhesion, but also such heat resistance, weldability, continuous workability and electric conductivity as an inorganic coating usually has, and such fingerprint resistance and paint adhesion as an organic coating usually has; a surface-treating process; and a surface-treated metallic material. More specifically, this invention relates to an aqueous surface-treating agent for metallic materials used to form, on molded and/or wrought products such as car bodies, automotive parts, building materials and parts for household appliances; cast products; sheet coils; etc., made of zinc-containing metal-plated steel sheets, steel sheets and/or aluminum-containing metallic materials, a coating having together not only excellent corrosion resistance and adhesion, but also such heat resistance, weldability, continuous workability and electric conductivity as an inorganic coating usually has, and such fingerprint resistance and paint adhesion as an organic coating usually has; a surface-treating process and a surface-treated metallic material.

### BACKGROUND ART

As techniques to form a coating excellent in adhesion to the surface of metallic materials and giving the surface corrosion resistance, fingerprint resistance, etc., there have generally been known a process to form a chromate coating using a treating liquid containing chromic acid or dichromic acid or a salt thereof as a main component; a process to form a coating by a phosphate salt treatment; a process to form a coating by treatment only with a silane coupling agent; a process to form a coating of an organic resin; etc., and these processes are put to practical use.

As a technique mainly using an inorganic component, a process is disclosed in JP-A-58-15541 to apply a treating liquid prepared by adding a specific amount of an organic silane coupling agent to a dilute water glass solution or a sodium silicate solution or a mixed solution of them onto a steel and then drying the resulting treating liquid to improve corrosion resistance and paint adhesion.

As a technique mainly using a silane coupling agent, it is taught in US-B-5,292,549 to treat a metallic sheet with an aqueous solution containing an organic functional group-containing silane in a low concentration and a crosslinking agent in order to gain a temporary anticorrosive effect. It is disclosed that the crosslinking agent crosslinks the organic functional group-containing silane to form a dense siloxane coating.

A process is disclosed in JP-A-2001-49453 to form a coating excellent in corrosion resistance and paint adhesion on the surface of a metal using a surface-treating agent containing a compound having two or more alkoxysilane moieties and a compound selected from organic acids, phosphoric acid and complex fluorides.

As a technique using an organic resin coating, a one pack-type aqueous coating agent for steels is disclosed in JP-A-2001-353750 which contains 5 to 30 % by mass of a water-dispersed resin, 0.1 to 20 % by mass of silica particles and 0.01 to 20 % by mass of an organic titanate compound, respectively as a concentration of solid matter; is excellent in bath stability; is capable of forming a coating excellent in corrosion resistance, solvent resistance, alkali resistance, paint adhesion and coating adhesion; and is suitable for application onto steels such as zinc-containing metal-coated steels and uncoated steels.

There are disclosed in JP-A-2003-105562 a non-chromium-type surface-treated steel sheet excellent in not only corrosion resistance but also fingerprint resistance, blackening resistance and paint adhesion obtained using a surface-treating agent containing a specific resin compound (A), a cationic urethane resin (B) having at least one cationic functional group selected from primary, secondary and tertiary amino groups and quaternary ammonium salt groups, at least one silane coupling agent (C) having a specific reactive functional group and a specific acid compound (E), in which surface-treating agent, the contents of the cationic urethane resin (B) and the silane coupling agent (C) are respectively in the prescribed ranges; and a process for preparation thereof.

WO 01/12876 A1 discloses an aqueous liquid surface treatment composition that comprises (i) molecules each of which contains at least two moieties that conform to general formula (I), wherein each of R¹, R², and R³ is independently selected from hydrogen atoms and alkyl moieties containing from 1 to 4 carbon atoms, all of these molecules together having a quotient of average molecular weight to the average number per molecules of moieties conforming to formula (I) that is within a range from 100 to 30,000, and (ii) one or more certain substances.

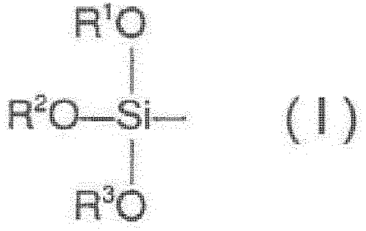

EP 0 949 353 A1 discloses an acidic surface-treating agent comprising (A) a certain cationic component (B) at least one certain acid component (C) a certain silane coupling-agent component (D) one or more certain water-soluble polymer components.

### DISCLOSURE OF INVENTION

However, techniques disclosed in the above-mentioned JP-A-58-15541, US-B-5,292,549 and JP-A-2001-49453 have problems that performances such as electric conductivity and fingerprint resistance are very poor; it is difficult to further enhance performances such as corrosion resistance and paint adhesion; even if it is possible to form a coating excellent in corrosion resistance and paint adhesion, there remains a problem in the aspects of environment and safety because of being a solvent-type treating agent; it is difficult to feed the described treating agent stably as an aqueous-type treating agent; etc., and thus have large problems for practical use.

Techniques disclosed in JP-A-2001-353750 and JP-A-2003-105562 have problems that the resulting coated metallic materials are poor in performances such as electric conductivity and spot weldability since corrosion resistance and fingerprint resistance are gained by coating the surface of a metallic material with an organic resin. Further, it is the present state of things that since the main component is an organic polymer and thus thermal decomposition, coloring, viscosity increase, etc. occur in high temperatures, the resulting coated metallic materials cannot be used for heat-resistant uses.

As seen from the above, it is the present state of things that such a surface-treating agent as is usable in place of one giving a chromate coating is not obtained, and development of a surface-treating agent and a surface-treating process capable of generally solving the above problems has strongly been desired.

This invention aims to provide a surface-treating agent for metallic materials which solves the above problems which prior arts have, and is capable of forming a novel coating having together not only excellent corrosion resistance and adhesion, but also such heat resistance, weldability, continuous workability and electric conductivity as an inorganic coating usually has, and such fingerprint resistance and paint adhesion as an organic coating usually has; a surface-treating process using the surface-treating agent; and a metallic material surface-treated therewith.

The present inventors have intensely studied to solve the above problems, and as a result, they found that a coating having together not only excellent corrosion resistance and adhesion, but also such heat resistance, weldability, continuous workability and electric conductivity as an inorganic coating usually has, and such fingerprint resistance and paint adhesion as an organic coating usually has can be formed by treating a metallic surface with an extremely stable aqueous chemical agent wherein an organic silicon compound having in one molecule a specific functional group (a) and a specific functional group (b) in a specific mutual ratio is compounded; and completed this invention.

Namely, this invention relates to an aqueous metal surface-treating agent, wherein an organic silicon compound which has, in one molecule, two or more of functional groups (a) represented by the formula -SiR¹R²R³, wherein R¹, R² and R³ represent mutually independently alkyl groups, alkoxyl groups or hydroxyl groups, and at least one of them is an alkoxyl group, and at least one hydrophilic functional group (b) selected from hydroxyl groups, which are different from those containable in the functional groups (a), and amino groups, and has a molecular weight, per one functional group (b), of 100 to 10,000, and a metallic compound (C) containing a bivalent or more metallic ion, are compounded, in which aqueous metal surface-treating agent, the organic silicon compound is a compound obtained by reacting an organic compound (A) selected from epoxy silanes, amino silanes, mercapto silanes, isocyanato silanes, vinyl group-containing silanes, epoxy compounds selected from sorbitol polyglycidyl ethers, polyglycerol polyglycidyl ethers and pentaerythritol polyglycidyl ethers, isocyanate compounds, methylol group-containing compounds, active methylene-containing compounds and imido compounds with an organic compound (B) being an amino silane, wherein when the metallic ion is a Zr ion, a Ti ion, a Hf ion or a Ce ion, the case where the metallic compound (C) is a colloidal dispersoid is excluded, and wherein the organic compound (A) having a functional group (I), and an organic compound (B) having a functional group (II) capable of reacting with the functional group (I) and at least one hydrophilic functional group (III) selected from hydroxyl groups (which are different from those containable in the following functional groups (a)), primary, secondary and tertiary amino groups, quaternary ammonium groups, phosphoric acid groups, phosphonic acid groups, sulfonic acid groups, primary amido groups, secondary amido groups and polyoxyethylene chains, all these groups and chains being different from those included in the functional groups (I) and/or the functional groups (II) are compounded, and at least one of the organic compound (A) and the organic compound (B) is an organic silane compound having a functional group (a) represented by the formula -SiR¹R²R³ (wherein R¹, R² and R³ are as defined above).

This invention also relates to a process for surface-treating a metallic material which comprises applying the above surface-treating agent onto the surface of the metallic material, and drying the resulting surface-treating agent to form a coating of 10 to 3,000 mg/m² in terms of SiO₂; and a metallic material surface-treated by the surface-treating process.

A surface-treated metallic material obtained by applying the surface-treating agent of the invention onto the surface of a metallic material, and drying the resulting surface-treating agent has together not only excellent corrosion resistance and adhesion, but also such heat resistance, weldability, continuous workability and electric conductivity as an inorganic coating usually has, and such fingerprint resistance and paint adhesion as an organic coating usually has.

### BEST MODE FOR CARRYING OUT THE INVENTION

The number of the functional group (a) in the organic silicon compound as an indispensable component of the aqueous metal surface-treating agent of the invention needs to be 2 or more. When the number of the functional group (a) is one, adhesion strength to the surface of a metallic material is lowered. The carbon number of the alkyl group and the alkoxyl group in the definition of R¹, R² and R³ in the functional group (a) is not particularly limited, but is preferably 1 to 6, further preferably 1 to 4 and still further preferably 1 or 2. As the proportion of presence of the functional group (b), the molecular weight of the organic silicon compound per one functional group (b) needs to be 100 to 10,000, and is preferably 200 to 5,000. When the molecular weight per one functional group (b) is less than 100, the water resistance of a coating formed is strikingly lowered. On the other hand, when the molecular weight per one functional group (b) is more than 10,000, the organic silicon compound becomes hard to dissolve or disperse stably.

The aqueous metal surface-treating agent of the invention is, as mentioned above, an aqueous metal surface-treating agent wherein an organic compound (A) having a functional group (I), and an organic compound (B) having a functional group (II) capable of reacting with the functional group (I) and at least one hydrophilic functional group (III) selected from hydroxyl groups (which are different from those containable in the following functional groups (a)), primary, secondary and tertiary amino groups, quaternary ammonium groups, phosphoric acid groups, phosphonic acid groups, sulfonic acid groups, primary amido groups, secondary amido groups and polyoxyethylene chains, all these groups and chains being different from those capable of being included in the functional groups (I) and/or the functional groups (II) are compounded, and at least one of the organic compound (A) and the organic compound (B) is an organic silane compound having a functional group (a) represented by the formula -SiR¹R²R³ (wherein R¹, R² and R³ are as defined above).

When the organic compound (B) does not have any hydrophilic functional group (III), or when the aqueous metal surface-treating agent contains only an organic compound (A) having a functional group (I) and a functional group (a) and does not contain the organic compound (B), such organic compound (B) or such organic compound (A) is unstable in an aqueous system or does not dissolve therein, which is an undesirable thing.

The organic compound (A) is selected from epoxy silanes such as 3-glycidyloxypropyltrimethoxysilane, 3-glycidyloxypropylmethyldimethoxysilane and 2-(3,4-epoxycyclohexyl)ethyltrimethoxysilane; amino silanes such as N-(2-aminoethyl)-3-aminopropylmethyldimethoxysilane, N-(aminoethyl)-3-aminopropyltrimethoxysilane and 3-aminopropyltriethoxysilane.; mercapto silanes such as 3-mercaptopropyltrimethoxysilane; isocyanato silanes such as 3-isocyanatopropyltrimethoxysilane and 3-isocyanatopropyltriethoxysilane; vinyl group-containing silanes such as vinyltriethoxysilane and p-styryltrimethoxysilane; epoxy compounds selected from sorbitol polyglycidyl ethers, polyglycerol polyglycidyl ethers and pentaerythritol polyglycidyl ethers; isocyanate compounds such as tolylene diisocyanate, diphenymethane diisocyanate, naphthalene diisocyanate and xylylene diisocyanate; methylol group-containing compounds such as melamine and dimethylolpropionic acid; active methylene-containing compounds such as acetoacetoxy acrylate; imido compounds such as N,N'-isopropylcarbodiimide; etc.

The organic compound (B) is an amino silane such as N-(2-aminoethyl)-3-aminopropylmethyldimethoxysilane, N-(aminoethyl)-3-aminopropyltrimethoxysilane and 3 -aminopropyltriethoxysilane.

It is preferred that the product formed by the reaction of the organic compound (A) and the organic compound (B) has at least one siloxane bond obtained by condensation of two or more of the functional groups (a). By forming siloxane bond(s) by condensation of two or more of the functional groups (a), the organic silicon compound or the above product comes to have a longer molecular chain and a branch, and, as a result, a coating of network structure becomes easy to form. Further, the reactivity of the silanol is lowered due to steric hindrance, etc., and the stability of the organic silicon compound or the above product in water further increases.

A metallic compound (C) containing a bivalent or more metallic ion (when the metallic ion is a Zr ion, a Ti ion, a Hf ion or a Ce ion, the case
where the metallic compound (C) is a colloidal dispersoid is excluded) is compounded into the aqueous metal surface-treating agent of the invention, and, thereby, the corrosion resistance of a metallic material treated with the aqueous metal surface-treating agent of the invention increases. It is preferred that the bivalent or more metallic ion is at least one selected from Ti, Zr, Hf, V, Mg, Mn, Zn, W, Mo, Al, Ni, Co and Ca ions. As the compound (C) containing a bivalent or more metallic ion, there can be mentioned salts of such metals with inorganic acids such as fluoro acids, phosphoric acid, nitric acid and sulfuric acid; salts of such metals with organic acids such as formic acid, acetic acid, butyric acid,
oxalic acid, succinic acid, lactic acid, L-ascorbic acid, tartaric acid, citric acid, DL-malic acid, malonic acid, maleic acid and phthalic acid; complex salts of such metals such as alkoxides, alkyl acetonates, alkanediolates, lactates, aminates and stearates thereof. Particularly as V ion-containing compounds, there is no particular limitation, and there can be exemplified vanadium pentoxide V₂O₅, metavanadic acid HVO₃, ammonium metavanadate, sodium metavanadate, vanadium oxytrichloride VOCl₃, vanadium trioxide V₂O₃, vanadium dioxide VO₂, vanadium oxysulfate VOSO₄, vanadium oxyacetylacetonate VO(OC(=CH₂)CH₂COCH₃)₂, vanadium acetylacetonate V(OC(=CH₂)CH₂COCH₃)₃, vanadium trichloride VCl₃, phosphorusvanadomolybdic acid, etc. When a pentavalent vanadium compound is used, a compound obtained by reducing the valence to tetravalent to bivalent with an organic compound having at least one functional group selected from the group consisting of hydroxyl groups, carbonyl groups, carboxyl groups, primary, secondary or tertiary amino groups, amide groups, phosphoric acid groups and phosphonic acid groups can also be used.

These metallic compounds (C) can be used alone or in a combination of two or more.

These metallic ions are considered to have an effect to increase corrosion resistance by control of the corrosion potential of the metal surface and control of oxidation reduction reaction in a corrosive environment, formation of a very thin coating on the metal surface, increase of the coating density due to crosslinking reaction with functional groups in the coating componenets, etc.

The compounding amount of the metallic compound (C) is preferably such a compounding amount that the mass ratio of the content of the metallic compound (C) to the content of Si derived from the functional group (a) in a coating obtained from the aqueous metal surface-treating agent, (C)/Si, becomes 0.01 to 10.0, and further preferably such a compounding amount that the mass ratio becomes 0.1 to 5.0. When (C)/Si is less than 0.01, the effect due to the compounding of the metallic compound (C) is not displayed, and thus corrosion resistance is not increased. Whereas, when (C)/Si is more than 10.0, the effect of compounding of the metallic compound (C) is not further increased, and the case is not economical.

It is preferred to compound at least one acid (D) selected from hydrofluoric acid, organic acids and phosphoric acid into the aqueous metal surface-treating agent of the invention, and, thereby, the corrosion resistance is increased. Hydrofluoric acid increases corrosion resistance by etching effect and further chelating action. Organic acids do not strongly etch metal surfaces because they are acids having a relatively low acidity among acids, but remove uneven very thin oxide coatings on the surface and thus increase corrosion resistance. Phosphoric acid forms phosphate conversion coatings on metal surfaces although the thickness is very thin, and increases corrosion resistance.

The compounding amount of the acid (D) is preferably such a compounding amount that the mass ratio of the content of the acid (D) to the content of Si derived from the functional group (a) in a coating obtained from the aqueous metal surface-treating agent, (D)/Si, becomes 0.01 to 10.0, and further preferably such a compounding amount that the mass ratio becomes 0.1 to 5.0. When (D)/Si is less than 0.01, the effect due to the compounding of the acid (D) is not displayed, and thus corrosion resistance is not increased. Whereas, when (D)/Si is more than 10.0, either etching is made excessively and corrosion resistance is lowered, or the effect of compounding of the acid (D) is not further increased and the case is not economical.

It is preferred to compound a colloidal dispersion (E) of the simple substance or a compound of at least one element selected from Si, Zr, Ti, Sn, Hf, Ce and Nb into the aqueous metal surface-treating agent of the invention. These colloidal particles have a concentration gradient in the state of distribution in the coating and are concentrated in the neighborhood of the metal surface to protect the metal surface, and thus, corrosion resistance is heightened. Furthermore, the colloidal particles increase the density of the coating and reduce the coating thickness, and, thus, electric conductivity is heightened, and further, effects of enhancement of the hardness and/or adhesion of the coating, etc. are brought about.

The compounding amount of the colloidal dispersion (E) is preferably such a compounding amount that the mass ratio of the solid content of the colloidal dispersion (E) to the content of Si derived from the functional group (a) in a coating obtained from the aqueous metal surface-treating agent, (E)/Si, becomes 0.01 to 10.0, and further preferably such a compounding amount that the mass ratio becomes 0.1 to 5.0. When (E)/Si is less than 0.01, the effect due to the compounding of the colloidal dispersion (E) is not displayed. Whereas, when (E)/Si is more than 10.0, the coating is embrittled, and thus, corrosion resistance and adhesion are lowered.

It is possible to compound a surfactant called a wettability-enhancing agent or a thickener in order to form an even coating on the surface to be coated, an electric conductivity-enhancing agent, a coloring pigment for enhancement of design properties, an auxiliary agent for enhancement of coating formability, etc. into the aqueous metal surface-treating agent of the invention. Further, it is also possible to compound, as an agent to give lubricity, an organic lubricant such as polyethylene wax or paraffin wax, a solid lubricant such as graphite, mica or molybdenum disulfide, etc.
It is possible to compound a compound having, in one molecule, at least one functional group selected from the group consisting of at least one unsaturated group selected from the group consisting of C=O groups, C=C groups, C=C groups, C=N groups, C=N groups and N=N groups; N-N groups; and S element-containing functional groups, such a compound being called an organic inhibitor, into the aqueous metal surface-treating agent of the invention, in order to further enhance corrosion resistance. As compounds having such a functional group, there can be mentioned, without limitative intention, C=O group-containing compounds including aldehydes such as formaldehyde and acetaldehyde, ketones such as acetone and methyl ethyl ketone, etc.; C=C group-containing compounds such as benzene and its derivatives, naphthalene and its derivatives, acrylic acid and methacrylic acid and their derivatives, alkyl carboxylates and alkylaldehydes; C=C group-containing compounds such as acetylene alcohol and acetylene derivatives; C=N group-containing compounds such as azines, triazines, osazone dyes, triphenylmethane dyes, chnidin, pyrimidine, pyrazole, imidazole, pyridinium compounds and quinolinium compounds; C=N group-containing compounds such as ethylene cyanohydrin; N-N group-containing compounds such as hydrazine compounds and their derivatives; N=N group-containing compounds such as azo dyes; S element-containing compounds such as sulfonic acids, sulfonates, sulfamides, thiourea and cyclic thiourea; etc.

The aqueous metal surface-treating agent of the invention is applied onto the surface of a metallic material and dried with heating to form a coating on the surface of the metallic material. The amount of the coating on the surface of the metallic material is preferably 10 to 3,000 mg/m² in terms of SiO₂.

There is no particular limitation as to metallic materials to which the process of the invention is applied, but zinc-containing metal-plated steel sheets, aluminium sheets and stainless steel sheets are preferred. The surfaces of these metallic materials may previously be subjected to a pretreatment such as phosphate treatment, chromate treatment or the like. There is no particular limitation as to a method to apply the aqueous metal surface-treating agent of the invention onto the surface of a metallic material, and a method such as an immersing method, a spraying method or a roll coating method can be used. There is no particular limitation either as to treatment (coating) temperature and treatment (coating) time, but, generally, treatment (coating) temperature is preferably 10 to 40°C and treatment (coating) time is preferably 0.1 to 10 seconds.

By evaporating the solvent, namely water or the alcohol from the layer of the treating liquid formed on the surface of the metallic material, a coating is formed. For industrially practical formation of a coating, it is preferred to heat drying the layer of the treating liquid. In the occasion, drying temperature is preferably 30 to 300°C, further preferably 40 to 250°C and still further preferably 60 to 200°C, as a peak metal temperature, and drying time is not particularly limited so long as the above condition of the peak metal temperature is met.

When the aqueous metal surface-treating agent of the invention is used, a novel coating having together not only excellent corrosion resistance and adhesion, but also such heat resistance, weldability, continuous workability and electric conductivity as an inorganic coating usually has, and such fingerprint resistance and paint adhesion as an organic coating usually has, can be formed on the surface of a metallic material. The reasons are surmised as follows, but the invention is not limited by such surmise. A coating formed using the aqueous metal surface-treating
agent of the invention comprises mainly the organic silicon compound. First, corrosion resistance is surmised to be displayed by remarkable barrier effect brought about by that when part of the organic silicon compound is concentrated by drying, etc., the molecules themselves of organic silicon compound mutually react to form a continuous coating, and -OR groups formed by hydrolysis of part of the organic silicon compound form Si-O-M bonds (M: metallic element(s) on the surface of the material to be coated) with the metal surface. Furthermore, by that formation of a dense coating becomes possible, it gets possible to make the coating thin and, as a result, electric conductivity becomes good.

Further, it is surmised that a coating formed using the aqueous metal surface-treating agent of the invention has silicon as a base, and as to its structure, the arrangement of silicon-organic chains is regular and the organic chain is relatively short, and thus, silicon-containing parts and organic parts, namely, inorganic substances and organic substances are arranged regularly and densely in very minute areas in the coating, and, therefore, formation of a novel coating having together such heat resistance, weldability, continuous workability and electric conductivity as an inorganic coating usually has, and such fingerprint resistance and paint adhesion as an organic coating usually has, becomes possible. In this connection, it is ascertained through analysis that, in the silicon-containing parts in the coating, about 80 % of the silicon forms siloxane bonds.

### Examples

The invention is specifically described below according to examples of the invention and comparative examples, but the invention is not limited thereby. Preparation of test sheets, examples and comparative examples, and processes of application of surface-treating agents for metallic materials are described below.

### Preparation of test sheets

### (1) Materials for tests

The following materials on the market were used.
- Electrogalvanized steel sheet (EG): sheet thickness = 0.8 mm, galvanization amount = 20/20 (g/m²)
- 5% aluminum-containing hot-dip zinc-plated steel sheet (GF): sheet thickness = 0.8 mm, plating amount = 90/90 (g/m²)
- Zinc-nickel alloy-plated steel sheet (Zn/Ni): sheet thickness = 0.8 mm, plating amount = 20/20 (g/m²)
- Hot-dip zinc-plated steel sheet (GI): sheet thickness = 0.8 mm, plating amount = 90/90 (g/m²)
- Hot-dip 55% zinc alloy-plated steel sheet (GL): sheet thickness = 0.8 mm, plating amount = 90/90 (g/m²)
- Alloyed (Zn-Fe) hot-dip zinc-plated steel sheet (GA): sheet thickness = 0.8 mm, plating amount = 60/60 (g/m²)
- A-1100 aluminum sheet (AL): sheet thickness = 0.8 mm

### (2) Degreasing treatment

A material was spray treated for 2 minutes using a silicate alkaline degreasing agent, Fine Cleaner 4336 (registered trade mark: made by Nihon Parkerizing Co., Ltd.) under the condition of concentration 20 g/L and temperature 60°C, washed with pure water for 30 seconds and dried, and the resulting material was used as a test sheet.

### Embodiment 1

### Preparation of aqueous metal surface-treating agents, application of the agents onto test sheets and drying thereof (examples), and preparation of aqueous metal surface-treating agents for comparison, application of the agents onto test sheets and drying thereof (comparative examples)

### <Composition A>

Two mols of trimethoxychlorosilane and 1mol of trimethylolpropane were reacted in ethanol, the resulting product solution was mixed with pure water and the mixture was adjusted so that the solid content became 10 %. As to the product, the number of the functional groups (a) is 2, and the molecular weight per one functional group (b) is about 530.

### <Composition B>

Two mols of vinyltrimethoxysilane and 1mol of sulfoethyl acrylate were reacted in ethanol, the resulting product solution was mixed with pure water and the mixture was adjusted so that the solid content became 10 %. As to the product, the number of the functional groups (a) is 2, and the molecular weight per one functional group (b) is about 320.

### <Composition C>

Two mols of 3-glycidoxypropyltrimethoxysilane and 1mol of 3-aminopropyltriethoxysilane were reacted in ethanol, the resulting product solution was mixed with pure water and the mixture was adjusted so that the solid content became 10 %. As to the product, the number of the functional groups (a) is 3, and the molecular weight per one functional group (b) is 700.

### <Composition D>

Two mols of N-(aminoethyl)-3-aminopropyltrimethoxysilane and 1mol of 3-isocyanatopropyltrimethoxysilane were reacted in ethanol, the resulting product solution was mixed with pure water and the mixture was adjusted so that the solid content became 10 %. As to the product, the number of the functional groups (a) is 2, and the molecular weight per one functional group (b) is about 800.

### <Composition E>

Four mols of 3-mercaptopropyltrimethoxysilane, 4 mols of 2-(3,4-epoxycyclohexyl)ethyltrimethoxysilane and 1mol of dimethylolpropionic acid were reacted in ethanol, the resulting product solution was mixed with pure water and the mixture was adjusted so that the solid content became 10 %. As to the product, the number of the functional groups (a) is 4, and the molecular weight per one functional group (b) is about 1,900.

### <Composition F>

Four mols of 3-glycidoxypropyltrimethoxysilane and 1mol of ethylenediamine were reacted in ethanol, the resulting product solution was mixed with pure water and the mixture was adjusted so that the solid content became 10 %. As to the product, the number of the functional groups (a) is 4, and the molecular weight per one functional group (b) is about 500.

### <Composition G>

Three mols of 3-aminopropyltriethoxysilane and 1mol of trimethylolpropane polyglycidyl ether were reacted in ethanol, the resulting product solution was mixed with pure water and the mixture was adjusted so that the solid content became 10 %. As to the product, the number of the functional groups (a) is 3, and the molecular weight per one functional group (b) is 300.

### <Composition H>

Seven mols of 3-mercaptopropyltrimethoxysilane, 1mol of pentaerythritol polyglycidyl ether and 1mol of 2-aminopropanethiol were reacted in ethanol, the resulting product solution was mixed with pure water and the mixture was adjusted so that the solid content became 10 %. As to the product, the number of the functional groups (a) is 7, and the molecular weight per one functional group (b) is 1,500.

### Metallic compound (C)

C1: Hexafluorotitanic acid
C2: Titanium alkoxide
C3: Hexafluorozirconic acid
C4: Ammonium zirconyl carbonate
C5: Hexafluorohafnic acid
C6: Vanadyl acetylacetonate
C7: magnesium hydrogenphosphate
C8: Zinc acetylacetonate
C9: Ammonium metatungstate
C10: Ammonium molybdate
C11: Aluminum hydrogenphosphate
C12: Nickel nitrate
C13: Cobalt nitrate
C14: Cerium nitrate
C15: Calcium hydrogenphosphate

An above compound (C), and an acid (D) and a colloidal dispersion (E) shown in Tables 1 to 3 were appropriately compounded into one of the compositions A to H to prepare an aqueous metal surface-treating agent as an example of Embodiment 1 shown in Tables 1 to 3. The treating agent was adjusted to a solid concentration of 10 % with water, bar coater applied onto the surface of a test sheet as shown in Tables 1 to 3 so that the resulting dry coating amount could be 700 mg/m², and dried so that the peak metal temperature could be 80°C to form a coating.

### Comparative example 1

A reactive chromate treatment was made onto a test sheet shown in Tables 4 to 10, and the resulting sheet was immersed in a comparative treating solution obtained by dissolving γ-glycidoxypropyltrimethoxysilane and methanol in deionized water so that the respective concentrations could be 12.0 % by mass and 10.0 % by mass, and, after draining by a wringer roll, dried so that the peak metal temperature could be 80°C to form a coating.

### Comparative example 2

A comparative treating solution obtained by dissolving γ-glycidoxypropyltrimethoxysilane and methanol in deionized water so that the respective concentrations could be 5.0 % by mass and 10 % by mass, was applied onto the surface of a test sheet using a No. 3 bar coater, and dried so that the peak metal temperature could be 80°C to form a coating.

### Comparative example 3

A comparative treating solution obtained by dissolving ammonium zirconium carbonate, ammonium phosphate and vanadyl acetylacetonate in water so that the respective concentrations could be 2.0 g/L, 2.0 g/L and 0.5 g/L was applied onto the surface of a test sheet using a No. 3 bar coater, and dried so that the peak metal temperature could be 80°C to form a coating.

### Comparative example 4

A comparative treating solution obtained by dispersing an ionomer resin, a water soluble multifunctional epoxy group-containing compound and an ammonium ion-adsorbing silica in water so that the respective concentrations could be 4.0 g/L, 0.5 g/L and 0.5 g/L was applied onto the surface of a test sheet using a No. 3 bar coater, and dried so that the peak metal temperature could be 80°C to form a coating.

### Embodiment 2

### Preparation of aqueous metal surface-treating agents, application of the agents onto test sheets and drying thereof (examples), and preparation of aqueous metal surface-treating agents for comparison, application of the agents onto test sheets and drying thereof (comparative examples)

### Organic compound (A)

A1: 3-Glycidoxypropyltrimethoxysilane
A2: 3-Aminopropyltrimethoxysilane
A3: 3-Mercaptopropyltrimethoxysilane
A4: 3-Isocyanatopropyltrimethoxysilane
A5: Pentaerythritol polyglycidyl ether
A6: Diphenylmethane diisocyanate
A7: Melamine
A8: Dimethylolpropionic acid
A9: N,N-Diisopropylcarbodiimide

### Organic compound (B)

B1: N-(aminoethyl)-3-aminopropyltrimethoxysilane
B2: Diphenylmethanediamine
B3: Neopentyl glycol polyglycidyl ether polyoxyethylene adduct
B4: Glycerol
B5: Diaminoalkylsulfonic acid
B6: a-glycerophosphoric acid

### Metallic compound (C)

The same as mentioned in Embodiment 1

An above organic compound (A), an above organic compound (B), an above metallic compound (C), and an acid (D) and a colloidal dispersion (E) shown in Table 11 were appropriately compounded into water to prepare an aqueous metal surface-treating agent as an example of Embodiment 2 shown in Table 11. The treating agent was adjusted to a solid concentration of 10 % with water, bar coater applied onto the surface of a test sheet as shown in Tables 12 to 18 so that the resulting dry coating amount could be 700 mg/m², and dried so that the peak metal temperature could be 80°C to form a coating.

### Comparative example 1

A reactive chromate treatment was made onto a test sheet, and the resulting sheet was immersed in a comparative treating solution obtained by dissolving γ-glycidoxypropyltrimethoxysilane and methanol in deionized water so that the respective concentrations could be 12.0 % by mass and 10.0 % by mass, and, after draining by a wringer roll, dried so that the peak metal temperature could be 80°C to form a coating.

### Comparative example 2

A comparative treating solution obtained by dissolving γ-glycidoxypropyltrimethoxysilane and methanol in deionized water so that the respective concentrations could be 5.0 % by mass and 10 % by mass, was applied onto the surface of a test sheet using a No. 3 bar coater, and dried so that the peak metal temperature could be 80°C to form a coating.

### Comparative example 3

A comparative treating solution obtained by dissolving ammonium zirconium carbonate, ammonium phosphate and vanadyl acetylacetonate in water so that the respective concentrations could be 2.0 g/L, 2.0 g/L and 0.5 g/L was applied onto the surface of a test sheet using a No. 3 bar coater, and dried so that the peak metal temperature could be 80°C to form a coating.

### Comparative example 4

A comparative treating solution obtained by dispersing an ionomer resin, a water soluble multifunctional epoxy group-containing compound and an ammonium ion-adsorbing silica in water so that the respective concentrations could be 4.0 g/L, 0.5 g/L and 0.5 g/L was applied onto the surface of a test sheet using a No. 3 bar coater, and dried so that the peak metal temperature could be 80°C to form a coating.

### Evaluation tests (Common to Embodiment 1 and Embodiment 2)

### (1) Corrosion resistance at the plane part

A salt spray test according to JIS-Z-2371 was made for 120 hours, and thereby, the state of incidence of white rust was observed.

### <Evaluation criterion>

⊚ = The proportion of incidence of white rust is less than 3 % of the whole area
○ = The proportion of incidence of white rust is 3 % or more but less than 10 % of the whole area
Δ = The proportion of incidence of white rust is 10 % or more but less than 30 % of the whole area
× = The proportion of incidence of white rust is 30 % or more of the whole area (2) Corrosion resistance at the wrought part

An Erichsen test (extrusion: 7 mm) was made, and, then, a salt spray test according to JIS-Z-2371 was made for 72 hours, and thereby, the state of incidence of white rust was observed.

### <Evaluation criterion>

⊚ = The proportion of incidence of white rust is less than 10 % of the whole area
○ = The proportion of incidence of white rust is 10 % or more but less than 20 % of the whole area
Δ = The proportion of incidence of white rust is 20 % or more but less than 30 % of the whole area
× = The proportion of incidence of white rust is 30 % or more of the whole area (3) Electric conductivity

The surface insulation resistance of a test sheet treated as mentioned above was measured using a device for measuring surface insulation resistance.

### <Evaluation criterion>

⊚ = The electric resistance is less than 1.0 Ω
○ = The electric resistance is 1.0 Ω or more but less than 2.0 Ω
Δ = The electric resistance is 2.0 Ω or more but less than 3.0 Ω
× = The electric resistance is 3.0 Ω or more

### (4) Heat resistance

A test sheet treated as mentioned above was heated at 200°C for 2 hours in an oven, and, then, subjected to a salt spray test according to JIS-Z-2371, and thereby, the state of incidence of white rust was observed.

### <Evaluation criterion>

⊚ = The proportion of incidence of white rust is less than 3 % of the whole area
○ = The proportion of incidence of white rust is 3 % or more but less than 10 % of the whole area
Δ = The proportion of incidence of white rust is 10 % or more but less than 30 % of the whole area
× = The proportion of incidence of white rust is 30 % or more of the whole area (5) Fingerprint resistance

A test sheet treated as mentioned above was coated with a vaseline, and the gain and loss of the L value (ΔL) between before and after the coating was measured by a color difference meter.

### <Evaluation criterion>

⊚ = ΔL is less than 0.5
○ = ΔL is 0.5 or more but less than 1.0
Δ = ΔL is 1.0 or more but less than 2.0
× = ΔL is 2.0 or more

### (6) Stability

A treating agent was allowed to stand in a constant temperature chamber of 40°C, the stability of the agent was evaluated by days which elapsed until the agent gels.

### <Evaluation criterion>

⊚ = There is no gelation
○ = Gelation days are 90 days or more but less than 120 days
Δ = Gelation days are 60 days or more but less than 90 days
× = Gelation days are less than 60 days

### Results of the evaluation tests

The results of the tests as to Embodiment 1 are shown in Tables 4 to 10. It is seen that the treating agents of Examples 1 to 56 in Tables 1 to 3 display corrosion resistance equal to that of the chromate, electrical conductivity and heat resistance equal to or more than those of the inorganic system and fingerprint resistance equal to that of the organic systems, and are extremely stable.

The results of the tests as to Embodiment 2 are shown in Tables 12 to 18. It is seen that the treating agents of Examples 1 to 15 in Table 11 display corrosion resistance equal to that of the chromate, electrical conductivity and heat resistance equal to or more than those of the inorganic system and fingerprint resistance equal to that of the organic systems, and are extremely stable.

**Table 1 Examples of Embodiment 1**

| | | Test sheet | Composition | Metallic compound (C) | | Acid (D) | | Colloidal dispersion (E) | |
|---|---|---|---|---|---|---|---|---|---|
| | | | | | (C)/Si | | (D)/Si | | (E)/Si |
| * | No.1 | EG | A | C1 | 0.01 | Hydrofluoric acid | 1.0 | SiO₂ | 5 |
| * | No.2 | | B | C2 | 2.4 | Phosphoric acid | 3.5 | ZrO₂ | 3.5 |
| | No.3 | | C | C3 | 0.07 | Phosphoric acid | 0.3 | - | - |
| | No.4 | | D | C4 | 0.03 | Phosphoric acid | 4. 2 | TiO₂ | 2 |
| * | No.5 | | E | C5 | 3.1 | Ascorbic acid | 9.4 | Sn | 2 |
| * | No.6 | | F | C6 | 0.1 | Hydrofluoric acid | 2.4 | - | - |
| | No.7 | | G | C7 | 1.2 | Hydrofluoric acid | 3.2 | - | - |
| * | No.8 | | H | C8 | 0.3 | Citric acid | 0.5 | Hf | 2.5 |
| * | No.9 | GF | A | C9 | 0.15 | Phosphoric acid | 0.0 | Ce | 2 |
| * | No.10 | | B | C10 | 2.2 | Hydrofluoric acid | 3.4 | - | - |
| * | No.11 | | C | C11 | 3.4 | Phosphoric acid | 5.4 | - | - |
| | No.12 | | D | C12 | 8.4 | Hydrofluoric acid | 6.1 | - | - |
| * | No.13 | | E | C13 | 2.6 | Tartaric acid | 3.8 | - | - |
| * | No.14 | | F | C14 | 0.1 | Phosphoric acid | 2. 1 | - | - |
| | No.15 | | G | C15 | 3.6 | Hydrofluoric acid | 6. 1 | Nb | 1 |
| * | No.16 | | H | C1 | 2.8 | Malonic acid | 1.0 | SiO₂ | 3.5 |
| * | No.17 | ZN | A | C2 | 6.4 | Phosphoric acid | 4.8 | ZrO₂ | 5 |
| * | No.18 | | B | C3 | 6.4 | Phosphoric acid | 2.4 | TiO₂ | 5 |
| | No.19 | | C | C4 | 3.2 | - | - | - | - |
| | No.20 | | D | C5 | 2.7 | Hydrofluoric acid | 1.1 | Sn | 2.5 |
| * | No.21 | | E | C6 | 9.4 | Butyric acid | 5.9 | Hf | 3 |
| * | No.22 | | F | C7 | 2.4 | Hydrofluoric acid | 3.4 | Ce | 0.1 |
| | No.23 | | G | C8 | 3.1 | Hydrofluoric acid | 2.2 | Nb | 0.5 |
| * | No.24 | | H | C9 | 2.8 | Phosphoric acid | 8.4 | - | - |

| | | | | | | | | | |
|---|---|---|---|---|---|---|---|---|---|
| * Reference | | | | | | | | | |

**Table 2 Examples of Embodiment 1**

| | | Test sheet | Composition | Metallic compound (C) | | Acid (D) | | Colloidal dispersion (E) | |
|---|---|---|---|---|---|---|---|---|---|
| | | | | | (C)/Si | | (D)/Si | | (E)/Si |
| * | No.25 | GI | A | C10 | 5.4 | Succinic acid | 6.1 | SiO₂ | 2 |
| * | No.26 | | B | C11 | 2.4 | Hydrofluoric acid | 3.1 | ZrO₂ | 2.5 |
| * | No.27 | | c | - | - | - | - | - | - |
| | No.28 | | D | C13 | 0.05 | Phosphoric acid | 2.1 | TiO₂ | 3 |
| * | No.29 | | E | C14 | 0.04 | Lactic acid | 5.8 | Sn | 3 |
| * | No.30 | | F | C15 | 2.4 | Hydrofluoric acid | 4.8 | Hf | 3.5 |
| | No.31 | | G | C1 | 0.5 | Hydrofluoric acid | 3. 4 | Ce | 3 |
| * | No.32 | | H | C2 | 9.1 | phthalic acid | 2.0 | - | - |
| * | No.33 | GL | A | C3 | 2.4 | Phosphoric acid | 0.4 | - | - |
| * | No. 34 | | B | C4 | 8.7 | Hydrofluoric acid | 0.05 | - | - |
| | No.35 | | C | C5 | 3.6 | Hydrofluoric acid | 3.0 | - | - |
| | No.36 | | D | C6 | 0.1 | Hydrofluoric acid | 2.4 | - | - |
| * | No.37 | | E | C7 | 0.05 | Hydrofluoric acid | 6.4 | Nb | |
| * | No.38 | | F | C8 | 3.4 | Hydrofluoric acid | 3.2 | SiO₂ | |
| | No.39 | | G | C9 | 0.8 | Phosphoric acid | 8.7 | ZrO₂ | 2. 5 |
| * | No.40 | | H | C10 | 3.4 | Lactic acid | 9.4 | TiO₂ | 2.5 |

| | | | | | | | | | |
|---|---|---|---|---|---|---|---|---|---|
| * Reference | | | | | | | | | |

**Table 3 Examples of Embodiment 1**

| | | Test sheet | Composition | Metallic compound (C) | | Acid (D) | | Colloidal dispersion (E) | |
|---|---|---|---|---|---|---|---|---|---|
| | | | | | (C)/Si | | (D)/Si | | (E)/Si |
| * | No.41 | GA | A | C11 | 4.8 | Phosphoric acid | 10 | Sn | 3.5 |
| * | No.42 | | B | C12 | 3.9 | Phosphoric acid | 3.1 | Hf | 3.5 |
| | No.43 | | C | C13 | 5.7 | Phosphoric acid | 2.8 | Ce | 2 |
| * | No.44 | | D | - | - | - | - | - | - |
| * | No.45 | | E | C15 | 3.4 | Phthalic acid | 4.4 | Nb | 2 |
| * | No.46 | | F | C1 | 2.8 | Hydrofluoric acid | 6.1 | SiO₂ | 2.5 |
| | No.47 | | G | C2 | 5.4 | Hydrofluoric acid | 3.7 | ZrO₂ | 2.5 |
| * | No.48 | | H | C3 | 2 | Phosphoric acid | 9.4 | - | - |
| * | No.49 | AL | A | C4 | 4.8 | Phosphoric acid | 3.1 | TiO₂ | 2 |
| * | No.50 | | B | C5 | 3.6 | Phosphoric acid | 5.4 | - | - |
| | No.51 | | C | C6 | 2.2 | Hydrofluoric acid | 9.7 | Sn | 3.5 |
| | No.52 | | D | C7 | 7.8 | Hydrofluoric acid | 6.1 | Hf | 3.5 |
| * | No.53 | | E | C8 | 8.1 | Tartaric acid | 5.8 | - | - |
| * | No.54 | | F | C9 | 2.4 | Phosphoric acid | 4.4 | Ce | 4.5 |
| * | No.55 | | G | C10 | 3.4 | Phosphoric acid | 6.7 | Nb | 5 |
| * | No.56 | | H | - | - | - | - | - | - |

| | | | | | | | | | |
|---|---|---|---|---|---|---|---|---|---|
| * Reference | | | | | | | | | |

**Table 4 Evaluation of examples and comparative examples of Embodiment 1**

| EG | | Corrosion resistance | | Electric conductivity | Heat resistance | Fingerprint resistance | Stability |
|---|---|---|---|---|---|---|---|
| | | Plane part | Wrought part | | | | |
| Example | No.1 | ⊚ | ⊚ | ⊚ | ⊚ | ⊚ | ⊚ |
| | No.2 | ○ | ○ | ⊚ | ⊚ | ○ | ⊚ |
| | No.3 | ⊚ | ⊚ | ⊚ | ⊚ | ⊚ | ⊚ |
| | No.4 | ⊚ | ⊚ | ⊚ | ○ | ○ | ⊚ |
| | No. 5 | ○ | ○ | ○ | ⊚ | ○ | ⊚ |
| | No.6 | ⊚ | ○ | ⊚ | ○ | ○ | ⊚ |
| | No.7 | ⊚ | ○ | ⊚ | ○ | ○ | ⊚ |
| | No.8 | ⊚ | ⊚ | ⊚ | ⊚ | ⊚ | ⊚ |
| Comparative example 1 | | ○ | ○ | ⊚ | x | ○ | Δ |
| Comparative example 2 | | Δ | × | × | Δ | × | × |
| Comparative example 3 | | Δ | × | ○ | ○ | × | ○ |
| Comparative example 4 | | ○ | Δ | × | × | ⊚ | ○ |

**Table 5 Evaluation of examples and comparative examples of Embodiment 1**

| GF | | Corrosion resistance | | Electric conductivity | Heat resistance | Fingerprint resistance | Stability |
|---|---|---|---|---|---|---|---|
| | | Plane part | Wrought part | | | | |
| Example | No. 9 | ○ | ○ | ⊚ | ⊚ | ⊚ | ⊚ |
| | No.10 | ○ | ○ | ⊚ | ○ | ○ | ⊚ |
| | No.11 | ⊚ | ○ | ○ | ○ | ○ | ⊚ |
| | No.12 | ⊚ | ⊚ | ○ | ○ | ○ | ⊚ |
| | No.13 | ○ | ○ | ⊚ | ○ | ○ | ⊚ |
| | No.14 | ⊚ | ⊚ | ⊚ | ○ | ○ | ⊚ |
| | No.15 | ⊚ | ⊚ | ○ | ⊚ | ○ | ⊚ |
| | No.16 | ⊚ | ○ | ⊚ | ⊚ | ○ | ⊚ |
| Comparative example 1 | | ○ | ○ | ⊚ | × | ○ | Δ |
| Comparative example 2 | | ○ | ○ | × | Δ | × | × |
| Comparative example 3 | | ⊚ | ○ | ○ | ○ | × | ○ |
| Comparative example 4 | | ⊚ | Δ | × | × | ⊚ | ○ |

**Table 6 Evaluation of examples and comparative examples of Embodiment 1**

| ZN | | Corrosion resistance | | Electric conductivity | Heat resistance | Fingerprint resistance | Stability |
|---|---|---|---|---|---|---|---|
| | | Plane part | Wrought part | | | | |
| Example | No.17 | ○ | ○ | ○ | ⊚ | ○ | ⊚ |
| | No.18 | ○ | ○ | ○ | ⊚ | ○ | ⊚ |
| | No.19 | ⊚ | ⊚ | ○ | ○ | ○ | ⊚ |
| | No.20 | ⊚ | ○ | ⊚ | ⊚ | ⊚ | ⊚ |
| | No.21 | ○ | ○ | ○ | ⊚ | ○ | ⊚ |
| | No.22 | ⊚ | ○ | ⊚ | ⊚ | ⊚ | ⊚ |
| | No.23 | ⊚ | ⊚ | ○ | ⊚ | ⊚ | ⊚ |
| | No.24 | ⊚ | ⊚ | ⊚ | ○ | ○ | ⊚ |
| Comparative example 1 | | ○ | ○ | ⊚ | × | ○ | Δ |
| Comparat ve example 2 | | ○ | Δ | × | Δ | × | × |
| Comparative example 3 | | ○ | Δ | ○ | ○ | × | ○ |
| . Comparative example 4 | | ○ | Δ | × | × | ⊚ | ○ |

**Table 7 Evaluation of examples and comparative examples of Embodiment 1**

| GI | | Corrosion resistance | | Electric conductivity | Heat resistance | Fingerprint resistance | Stability |
|---|---|---|---|---|---|---|---|
| | | Plane part | Wrought part | | | | |
| Example | No.25 | ○ | ⊚ | ○ | ⊚ | ○ | ⊚ |
| | No.26 | ○ | ○ | ⊚ | ⊚ | ⊚ | ⊚ |
| | No.27 | ○ | ○ | ○ | ○ | ○ | ⊚ |
| | No.28 | ⊚ | ○ | ⊚ | ⊚ | ○ | ⊚ |
| | No.29 | ○ | ○ | ⊚ | ⊚ | ○ | ⊚ |
| | No.30 | ⊚ | ⊚ | ⊚ | ⊚ | ○ | ⊚ |
| | No.31 | ⊚ | ⊚ | ⊚ | ⊚ | ○ | ⊚ |
| | No.32 | ⊚ | ⊚ | ○ | ○ | ○ | ⊚ |
| Comparative example 1 | | ○ | ○ | ⊚ | × | ○ | Δ |
| Comparative example 2 | | ○ | Δ | × | Δ | × | × |
| Comparative example 3 | | ○ | Δ | ○ | ○ | × | ○ |
| Comparative example 4 | | ⊚ | ○ | × | × | ⊚ | ○ |

**Table 8 Evaluation of examples and comparative examples of Embodiment 1**

| GL | | Corrosion resistance | | Electric conductivity | Heat resistance | Fingerprint resistance | Stability |
|---|---|---|---|---|---|---|---|
| | | Plane part | Wrought part | | | | |
| Example | No.33 | ○ | ○ | ⊚ | ○ | ○ | ⊚ |
| | No.34 | ○ | ○ | ○ | ○ | ○ | ⊚ |
| | No.35 | ⊚ | ⊚ | ○ | ○ | ○ | ⊚ |
| | No.36 | ⊚ | ⊚ | ⊚ | ○ | ○ | ⊚ |
| | No.37 | ○ | ○ | ⊚ | ⊚ | ○ | ⊚ |
| | No.38 | ⊚ | ⊚ | ○ | ⊚ | ⊚ | ⊚ |
| | No.39 | ⊚ | ○ | ⊚ | ⊚ | ○ | ⊚ |
| | No.40 | ⊚ | ○ | ○ | ⊚ | ○ | ⊚ |
| Comparative example 1 | | ○ | ○ | ⊚ | × | ○ | Δ |
| Comparative example 2 | | Δ | Δ | × | Δ | × | × |
| Comparative example 3 | | Δ | Δ | ○ | ○ | × | ○ |
| Comparative example 4 | | ○ | ○ | × | × | ⊚ | ○ |

**Table 9 Evaluation of examples and comparative examples of Embodiment 1**

| GA | | Corrosion resistance | | Electric conductivity | Heat resistance | Fingerprint resistance | Stability |
|---|---|---|---|---|---|---|---|
| | | Plane part | Wrought part | | | | |
| Example | No.41 | ○ | ○ | ○ | ⊚ | ○ | ⊚ |
| | No.42 | ○ | ○ | ○ | ⊚ | ○ | ⊚ |
| | No.43 | ⊚ | ○ | ○ | ⊚ | ○ | ⊚ |
| | No.44 | ○ | ○ | ○ | ○ | ○ | ⊚ |
| | No.45 | ○ | ○ | ○ | ⊚ | ⊚ | ⊚ |
| | No.46 | ⊚ | ○ | ⊚ | ⊚ | ○ | ⊚ |
| | No.47 | ⊚ | ⊚ | ○ | ⊚ | ○ | ⊚ |
| | No.48 | ⊚ | ⊚ | ⊚ | ○ | ○ | ⊚ |
| Comparative example 1 | | ○ | ○ | ⊚ | × | ○ | Δ |
| Comparative example 2 | | Δ | Δ | × | Δ | × | × |
| Comparative example 3 | | Δ | Δ | ○ | ○ | × | ○ |
| Comparative example 4 | | ○ | ○ | × | × | ⊚ | ○ |

**Table 10 Evaluation of examples and comparative examples of Embodiment 1**

| AL | | Corrosion resistance | | Electric conductivity | Heat resistance | Fingerprint resistance | Stability |
|---|---|---|---|---|---|---|---|
| | | Plane part | Wrought part | | | | |
| Example | No.49 | ○ | ⊚ | ○ | ⊚ | ⊚ | ⊚ |
| | No.50 | ○ | ○ | ○ | ○ | ○ | ⊚ |
| | No.51 | ⊚ | ⊚ | ⊚ | ⊚ | ○ | ⊚ |
| | No.52 | ⊚ | ○ | ○ | ⊚ | ○ | ⊚ |
| | No.53 | ○ | ○ | ○ | ○ | ○ | ⊚ |
| | No.54 | ⊚ | ○ | ⊚ | ⊚ | ○ | ⊚ |
| | No.55 | ⊚ | ⊚ | ○ | ⊚ | ○ | ⊚ |
| | No.56 | ○ | ○ | ○ | ○ | ○ | ⊚ |
| Comparative example 1 | | ○ | ○ | ⊚ | × | ○ | Δ |
| Comparative example 2 | | ○ | ⊚ | × | Δ | × | × |
| Comparative example 3 | | ○ | ⊚ | ○ | ○ | × | ○ |
| Comparative example 4 | | ⊚ | ○ | × | × | ⊚ | ○ |

**Table 11 Examples of Embodiment 2**

| | | Organic compound (A) | Organic compound (B) | (A):(B) (mol ratio) | Metallic compound (C) | | Acid (D) | | Colloidal dispersion (E) | |
|---|---|---|---|---|---|---|---|---|---|---|
| | | | | | | (C)/Si | | (D)/Si | | (E)/Si |
| | No.1 | A1 | B1 | 2:1 | C1 | 0.03 | Phosphoric acid | - | - | - |
| | No.2 | A1 | B1 | 2:1 | C2 | 1.2 | Phosphoric acid | 0.8 | ZrO₂ | 1.5 |
| * | No.3 | A1 | B2 | 2:1 | C3 | 3.7 | Phosphoric acid | 2.4 | TiO₂ | 0.2 |
| * | No.4 | A1 | B2 | 2:1 | C4 | 5.4 | Hydrofluoric acid | 1.5 | Sn | 3.8 |
| * | No.5 | A1 | B5 | 2:1 | C5 | 2.1 | Hydrofluoric acid | 3.2 | Hf | 2.7 |
| | No.6 | A2 | B3 | 2:1 | C6 | 0.01 | Hydrofluoric acid | 9.4 | Ce | 5.4 |
| * | No.7 | A3 | B3 | 2:1 | C7 | 9.9 | Hydrofluoric acid | 3.1 | Nb | 6.8 |
| | No.8 | A4 | B1 | 2:1 | C8 | 8.2 | Formic acid | 5.4 | SiO₂ | 0.05 |
| * | No.9 | A4 | B2 | 2:1 | C9 | 0.4 | Butyric acid | 0.04 | ZrO₂ | 2.4 |
| * | No.10 | A4 | B4 | 2:1 | C10 | 6.2 | Acetic acid | 3.2 | TiO₂ | 3.9 |
| | No.11 | A5 | B1 | 1:2 | C11 | 8.1 | Oxalic acid | 4.8 | Sn | 2.5 |
| | No.12 | A6 | B1 | 1:2 | C12 | 3.4 | Succinic acid | 3.6 | Hf | 0.01 |
| | No.13 | A7 | B1 | 1:2 | C13 | 6.4 | Lactic acid | 8.7 | Ce | 3.3 |
| | No.14 | A8 | B1 | 1:2 | C14 | 2.2 | Tartaric acid | 6.4 | Nb | 7.8 |
| | No.15 | A9 | B1 | 1:2 | C15 | 0.1 | Citric acid | 3.1 | SiO₂ | 6.4 |

| | | | | | | | | | | |
|---|---|---|---|---|---|---|---|---|---|---|
| * Reference | | | | | | | | | | |

**Table 12 Evaluation of examples and comparative examples of Embodiment 2**

| EG | | Corrosion resistance | | Electric conductivity | Heat resistance | Fingerprint resistance | Stability |
|---|---|---|---|---|---|---|---|
| | | Plane part | Wrought part | | | | |
| Example | No.1 | ⊚ | ⊚ | ⊚ | ⊚ | ⊚ | ⊚ |
| | No.2 | ○ | ○ | ⊚ | ⊚ | ○ | ⊚ |
| | No.3 | ⊚ | ⊚ | ⊚ | ⊚ | ⊚ | ⊚ |
| | No.4 | ⊚ | ⊚ | ⊚ | ○ | ○ | ⊚ |
| | No.5 | ○ | ○ | ○ | ⊚ | ○ | ⊚ |
| | No.6 | ⊚ | ○ | ⊚ | ○ | ○ | ⊚ |
| | No.7 | ⊚ | ○ | ⊚ | ○ | ○ | ⊚ |
| | No.8 | ⊚ | ⊚ | ⊚ | ⊚ | ⊚ | ⊚ |
| | No.9 | ○ | ○ | ⊚ | ⊚ | ○ | ⊚ |
| | No.10 | ⊚ | ⊚ | ⊚ | ⊚ | ⊚ | ⊚ |
| | No.11 | ⊚ | ⊚ | ⊚ | ○ | ○ | ⊚ |
| | No.12 | ○ | ○ | ○ | ⊚ | ○ | ⊚ |
| | No.13 | ⊚ | ○ | ⊚ | ○ | ○ | ⊚ |
| | No.14 | ⊚ | ○ | ⊚ | ○ | ○ | ⊚ |
| | No.15 | ⊚ | ⊚ | ⊚ | ⊚ | ⊚ | ⊚ |
| Comparative example 1 | | ○ | ○ | ⊚ | × | ○ | Δ |
| Comparative example 2 | | Δ | × | × | Δ | × | × |
| Comparative example 3 | | Δ | × | ○ | ○ | × | ○ |
| Comparative example 4 | | ○ | Δ | × | × | ⊚ | ○ |

**Table 13 Evaluation of examples and comparative examples of Embodiment 2**

| GF | | Corrosion resistance | | Electric conductivity | Heat resistance | Fingerprint resistance | I Stability |
|---|---|---|---|---|---|---|---|
| | | Plane part | Wrought part | | | | |
| | No.1 | ○ | ○ | ⊚ | ⊚ | ⊚ | ⊚ |
| | No.2 | ○ | ○ | ⊚ | ○ | ○ | ⊚ |
| | No.3 | ⊚ | ○ | ○ | ○ | ○ | ⊚ |
| | No.4 | ⊚ | ⊚ | ○ | ○ | ○ | ⊚ |
| | No.5 | ○ | ○ | ⊚ | ○ | ○ | ⊚ |
| | No.6 | ⊚ | ⊚ | ⊚ | ○ | ○ | ⊚ |
| | No.7 | ⊚ | ⊚ | ○ | ⊚ | ○ | ⊚ |
| Example | No.8 | ⊚ | ○ | ⊚ | ⊚ | ○ | ⊚ |
| | No.9 | ○ | ○ | ⊚ | ○ | ○ | ⊚ |
| | No.10 | ⊚ | ○ | ○ | ○ | ○ | ⊚ |
| | No.11 | ⊚ | ⊚ | ○ | ○ | ○ | ⊚ |
| | No.12 | ○ | ○ | ⊚ | ○ | ○ | ⊚ |
| | No.13 | ⊚ | ⊚ | ⊚ | ○ | ○ | ⊚ |
| | No.14 | ⊚ | ⊚ | ○ | ⊚ | ○ | ⊚ |
| | No.15 | ⊚ | ○ | ⊚ | ⊚ | ○ | ⊚ |
| Comparative example 1 | | ○ | ○ | ⊚ | × | ○ | Δ |
| Comparative example 2 | | ○ | ○ | × | Δ | × | × |
| Comparative example 3 | | ⊚ | ○ | ○ | ○ | × | ○ |
| Comparative example 4 | | ⊚ | Δ | × | × | ⊚ | ○ |

**Table 14 Evaluation of examples and comparative examples of Embodiment 2**

| ZN | | Corrosion resistance | | Electric conductivity | Heat resistance | Fingerprint resistance | Stability |
|---|---|---|---|---|---|---|---|
| | | Plane part | Wrought part | | | | |
| | No.1 | ⊚ | ⊚ | ⊚ | ⊚ | ⊚ | ⊚ |
| | No.2 | ○ | ○ | ⊚ | ⊚ | ○ | ⊚ |
| | No.3 | ⊚ | ⊚ | ⊚ | ⊚ | ⊚ | ⊚ |
| | No.4 | ⊚ | ⊚ | ⊚ | ○ | ○ | ⊚ |
| | No.5 | ○ | ○ | ○ | ⊚ | ○ | ⊚ |
| | No.6 | ⊚ | ○ | ⊚ | ○ | ○ | ⊚ |
| | No.7 | ⊚ | ○ | ⊚ | ○ | ○ | ⊚ |
| Example | No.8 | ⊚ | ⊚ | ⊚ | ⊚ | ⊚ | ⊚ |
| | No.9 | ○ | ○ | ⊚ | ⊚ | ○ | ⊚ |
| | No.10 | ⊚ | ⊚ | ⊚ | ⊚ | ⊚ | ⊚ |
| | No.11 | ⊚ | ⊚ | ⊚ | ○ | ○ | ⊚ |
| | No.12 | ○ | ○ | ○ | ⊚ | ○ | ⊚ |
| | No.13 | ⊚ | ○ | ⊚ | ○ | ○ | ⊚ |
| | No.14 | ⊚ | ○ | ⊚ | ○ | ○ | ⊚ |
| | No.15 | ⊚ | ⊚ | ⊚ | ⊚ | ⊚ | ⊚ |
| Comparative example 1 | | ○ | ○ | ⊚ | × | ○ | Δ |
| Comparative example 2 | | Δ | × | × | Δ | × | × |
| Comparative example 3 | | Δ | × | ○ | ○ | × | ○ |
| Comparative example 4 | | ○ | Δ | × | × | ⊚ | ○ |

**Table 15 Evaluation of examples and comparative examples of Embodiment 2**

| GI | | Corrosion resistance | | Electric conductivity | Heat resistance | Fingerprint resistance | Stability |
|---|---|---|---|---|---|---|---|
| | | Plane part | Wrought part | | | | |
| | No.1 | ○ | ○ | ⊚ | ⊚ | ⊚ | ⊚ |
| | No.2 | ○ | ○ | ⊚ | ○ | ○ | ⊚ |
| | No.3 | ⊚ | ○ | ○ | ○ | ○ | ⊚ |
| | No.4 | ⊚ | ⊚ | ○ | ○ | ○ | ⊚ |
| | No.5 | ○ | ○ | ⊚ | ○ | ○ | ⊚ |
| | No.6 | ⊚ | ⊚ | ⊚ | ○ | ○ | ⊚ |
| | No.7 | ⊚ | ⊚ | ○ | ⊚ | ○ | ⊚ |
| Example | No.8 | ⊚ | ○ | ⊚ | ⊚ | ○ | ⊚ |
| | No.9 | ○ | ○ | ⊚ | ○ | ○ | ⊚ |
| | No.10 | ⊚ | ○ | ○ | ○ | ○ | ⊚ |
| | No.11 | ⊚ | ⊚ | ○ | ○ | ○ | ⊚ |
| | No.12 | ○ | ○ | ⊚ | ○ | ○ | ⊚ |
| | No.13 | ⊚ | ⊚ | ⊚ | ○ | ○ | ⊚ |
| | No.14 | ⊚ | ⊚ | ○ | ⊚ | ○ | ⊚ |
| | No.15 | ⊚ | ○ | ⊚ | ⊚ | ○ | ⊚ |
| Comparative example 1 | | ○ | ○ | ⊚ | × | ○ | Δ |
| Comparative example 2 | | ○ | ○ | × | Δ | × | × |
| Comparative example 3 | | ⊚ | ○ | ○ | ○ | × | ○ |
| Comparative example 4 | | ⊚ | Δ | × | × | ⊚ | ○ |

**Table 16 Evaluation of examples and comparative examples of Embodiment 2**

| GL | | Corrosion resistance | | Electric conductivity | Heat resistance | Fingerprint resistance | Stability |
|---|---|---|---|---|---|---|---|
| | | Plane part | Wrought part | | | | |
| | No.1 | ○ | ○ | ○ | ⊚ | ○ | ⊚ |
| | No.2 | ○ | ○ | ○ | ⊚ | ○ | ⊚ |
| | No.3 | ⊚ | ⊚ | ○ | ○ | ○ | ⊚ |
| | No.4 | ⊚ | ○ | ⊚ | ⊚ | ⊚ | ⊚ |
| | No.5 | ○ | ○ | ○ | ⊚ | ○ | ⊚ |
| | No.6 | ⊚ | ○ | ⊚ | ⊚ | ⊚ | ⊚ |
| | No.7 | ⊚ | ⊚ | ○ | ⊚ | ⊚ | ⊚ |
| Example | No.8 | ⊚ | ⊚ | ⊚ | ○ | ○ | ⊚ |
| | No.9 | ○ | ○ | ○ | ⊚ | ○ | ⊚ |
| | No.10 | ⊚ | ⊚ | ○ | ○ | ○ | ⊚ |
| | No.11 | ⊚ | ○ | ⊚ | ⊚ | ⊚ | ⊚ |
| | No.12 | ○ | ○ | ○ | ⊚ | ○ | ⊚ |
| | No.13 | ⊚ | ○ | ⊚ | ⊚ | ⊚ | ⊚ |
| | No.14 | ⊚ | ⊚ | ○ | ⊚ | ⊚ | ⊚ |
| | No.15 | ⊚ | ⊚ | ⊚ | ○ | ○ | ⊚ |
| Comparative example 1 | | ○ | ○ | ⊚ | × | ○ | Δ |
| Comparative example 2 | | ○ | Δ | × | Δ | × | × |
| Comparative example 3 | | ○ | Δ | ○ | ○ | × | ○ |
| Comparative example 4 | | ○ | Δ | × | × | ⊚ | ○ |

**Table 17 Evaluation of examples and comparative examples of Embodiment 2**

| GA | | Corrosion resistance | | Electric conductivity | Heat resistance | Fingerprint resistance | Stability |
|---|---|---|---|---|---|---|---|
| | | Plane part | Wrought part | | | | |
| | No.1 | ○ | ⊚ | ○ | ⊚ | ○ | ⊚ |
| | No.2 | ○ | ○ | ⊚ | ⊚ | ⊚ | ⊚ |
| | No.3 | ○ | ○ | ○ | ○ | ○ | ⊚ |
| | No.4 | ⊚ | ○ | ⊚ | ⊚ | ○ | ⊚ |
| | No.5 | ○ | ○ | ⊚ | ⊚ | ○ | ⊚ |
| | No.6 | ⊚ | ⊚ | ⊚ | ⊚ | ○ | ⊚ |
| | No.7 | ⊚ | ⊚ | ⊚ | ⊚ | ○ | ⊚ |
| Example | No.8 | ⊚ | ⊚ | ○ | ○ | ○ | ⊚ |
| | No.9 | ○ | ○ | ⊚ | ⊚ | ⊚ | ⊚ |
| | No.10 | ○ | ○ | ○ | ○ | ○ | ⊚ |
| | No.11 | ⊚ | ○ | ⊚ | ⊚ | ○ | ⊚ |
| | No.12 | ○ | ○ | ⊚ | ⊚ | ○ | ⊚ |
| | No.13 | ⊚ | ⊚ | ⊚ | ⊚ | ○ | ⊚ |
| | No.14 | ⊚ | ⊚ | ⊚ | ⊚ | ○ | ⊚ |
| | No.15 | ⊚ | ⊚ | ○ | ○ | ○ | ⊚ |
| Comparative example 1 | | ○ | ○ | ⊚ | × | ○ | Δ |
| Comparative example 2 | | ○ | Δ | × | Δ | × | × |
| Comparative example 3 | | ○ | Δ | ○ | ○ | × | ○ |
| Comparative example 4 | | ⊚ | ○ | × | × | ⊚ | ○ |

**Table 18 Evaluation of examples and comparative examples of Embodiment 2**

| Al | | Corrosion resistance | | Electric conductivity | Heat resistance | Fingerprint resistance | Stability |
|---|---|---|---|---|---|---|---|
| | | Plane part | Wrought part | | | | |
| | No.1 | ○ | ⊚ | ○ | ⊚ | ⊚ | ⊚ |
| | No.2 | ○ | ○ | ○ | ○ | ○ | ⊚ |
| | No.3 | ⊚ | ⊚ | ⊚ | ⊚ | ○ | ⊚ |
| | No.4 | ⊚ | ○ | ○ | ⊚ | ○ | ⊚ |
| | No.5 | ○ | ○ | ○ | ○ | ○ | ⊚ |
| | No.6 | ⊚ | ○ | ⊚ | ⊚ | ○ | ⊚ |
| | No.7 | ⊚ | ⊚ | ○ | ⊚ | ○ | ⊚ |
| Example | No.8 | ○ | ○ | ○ | ○ | ○ | ⊚ |
| | No.9 | ○ | ○ | ○ | ○ | ○ | ⊚ |
| | No.10 | ⊚ | ⊚ | ⊚ | ⊚ | ○ | ⊚ |
| | No.11 | ⊚ | ○ | ○ | ⊚ | ○ | ⊚ |
| | No.12 | ○ | ○ | ○ | ○ | ○ | ⊚ |
| | No.13 | ⊚ | ○ | ⊚ | ⊚ | ○ | ⊚ |
| | No.14 | ⊚ | ⊚ | ○ | ⊚ | ○ | ⊚ |
| | No.15 | ○ | ○ | ○ | ○ | ○ | ⊚ |
| Comparative example 1 | | ○ | ○ | ⊚ | × | ○ | Δ |
| Comparative example 2 | | ○ | ⊚ | × | Δ | × | × |
| Comparative example 3 | | ○ | ⊚ | ○ | ○ | × | ○ |
| Comparative example 4 | | ⊚ | ○ | × | × | ⊚ | ○ |

## Claims

1. An aqueous metal surface-treating agent, wherein an organic silicon compound which has, in one molecule, two or more of functional groups (a) represented by the formula -SiR¹R²R³, wherein R¹, R² and R³ represent mutually independently alkyl groups, alkoxyl groups or hydroxyl groups, and at least one of them is an alkoxyl group, and at least one hydrophilic functional group (b) selected from hydroxyl groups, which are different from those containable in the functional groups (a), and amino groups, and has a molecular weight, per one functional group (b), of 100 to 10,000, and a metallic compound (C) containing a bivalent or more metallic ion, are compounded, in which aqueous metal surface-treating agent, the organic silicon compound is a compound obtained by reacting an organic compound (A) selected from epoxy silanes, amino silanes, mercapto silanes, isocyanato silanes, vinyl group-containing silanes, epoxy compounds selected from sorbitol polyglycidyl ethers, polyglycerol polyglycidyl ethers and pentaerythritol polyglycidyl ethers, isocyanate compounds, methylol group-containing compounds, active methylene-containing compounds and imido compounds with an organic compound (B) being an amino silane,
wherein when the metallic ion is a Zr ion, a Ti ion, a Hf ion or a Ce ion, the case where the metallic compound (C) is a colloidal dispersoid is excluded, and
wherein the organic compound (A) having a functional group (I), and the organic compound (B) having a functional group (II) capable of reacting with the functional group (I) and at least one hydrophilic functional group (III) selected from hydroxyl groups, which are different from those containable in the following functional groups (a), primary, secondary and tertiary amino groups, quaternary ammonium groups, phosphoric acid groups, phosphonic acid groups, sulfonic acid groups, primary amido groups, secondary amido groups and polyoxyethylene chains, all these groups and chains being different from those included in the functional groups (I) and/or the functional groups (II) are compounded, and at least one of the organic compound (A) and the organic compound (B) is an organic silane compound having the functional group (a).

2. A surface-treating agent according to Claim 1, wherein, in the organic compound (A), the epoxy silanes are selected from 3-glycidyloxypropyltrimethoxysilane, 3-glycidyloxypropylmethyldimethoxysilane and 2-(3,4-epoxycyclohexyl) ethyltrimethoxysilane; the amino silanes are selected from N-(2-aminoethyl)-3-aminopropylmethyldimethoxysilane, N-(aminoethyl)-3-aminopropyltrimethoxysilane and 3-aminopropyltriethoxysilane; the mercapto silane is 3-mercaptopropyltrimethoxysilane; the isocyanato silanes are selected from 3-isocyanatopropyltrimethoxysilane and 3-isocyanatopropyltriethoxysilane; the vinyl group-containing silanes are selected from vinyltriethoxysilane and p-styryltrimethoxysilane; the isocyanate compounds are selected from tolylene diisocyanate, diphenylmethane diisocyanate, naphthalene diisocyanate and xylylene diisocyanate; the methylol group-containing compounds are selected from melamine and dimethylolpropionic acid; the active methylene-containing compound is acetoacetoxy acrylate; and the imido compound is N,N'-isopropylcarbodiimide, and in the organic compound (B), the amino silanes are selected from N-(2-aminoethyl)-3-aminopropylmethyldimethoxysilane, N-(aminoethyl)-3-aminopropyltrimethoxysilane and 3-aminopropyltriethoxysilane.

3. A surface-treating agent according to Claim 1 or Claim 2, wherein the bivalent or more metallic ion is at least one selected from Ti, Zr, Hf, V, Mg, Mn, Zn, W, Mo, Al, Ni, Co, Ce and Ca ions.

4. A surface-treating agent according to any preceding claim, wherein the mass ratio of the content of the metallic compound (C) to the content of Si derived from the functional group (a), in a coating obtained from the surface-treating agent, (C)/Si, is 0.01 to 10.0.

5. A surface-treating agent according to any preceding claim, wherein at least one acid (D) selected from hydrofluoric acid, organic acids and phosphoric acid is compounded.

6. A surface-treating agent according to Claim 5, wherein the mass ratio of the content of the acid (D) to the content of Si derived from the functional group (a), in a coating obtained from the surface-treating agent, (D)/Si, is 0.01 to 10.0.

7. A surface-treating agent according to any preceding claim, wherein a colloidal dispersion (E) of the simple substance or compound of at least one element selected from Si, Zr, Ti, Sn, Hf, Ce and Nb is compounded.

8. A process for surface-treating a metallic material which comprises applying the surface-treating agent according to any preceding claim onto the surface of the metallic material, and drying the resulting surface-treating agent to form a coating of 10 to 3,000 mg/m² in terms of SiO₂.

9. A metallic material surface-treated by the process according to Claim 8.

## Patentansprüche

1. Wässriges Metalloberflächen-Behandlungsmittel, wobei eine organische Siliciumverbindung, die in einem Molekül zwei oder mehr funktionelle Gruppen (a), dargestellt durch die Formel -SiR¹R²R³, aufweist, worin R¹, R² und R³ voneinander unabhängig Alkylgruppen, Alkoxylgruppen oder Hydroxylgruppen darstellen und zumindest eine von diesen eine Alkoxylgruppe ist, und zumindest eine hydrophile funktionelle Gruppe (b), ausgewählt aus Hydroxylgruppen, die sich von denen unterscheiden, die in den funktionellen Gruppen (a) enthalten sind, und Aminogruppen, aufweist und ein Molekulargewicht, pro einer funktionellen Gruppe (b), von 100 bis 10.000 hat, und eine metallische Verbindung (C), enthaltend ein zwei- oder mehrwertiges Metallion, kompoundiert sind, wobei in dem wässrigen Metalloberflächen-Behandlungsmittel die organische Siliciumverbindung eine Verbindung ist, die durch Umsetzen einer organischen Verbindung (A), ausgewählt aus Epoxysilanen, Aminosilanen, Mercaptosilanen, Isocyanatsilanen, vinylgruppehaltigen Silanen, Epoxyverbindungen, ausgewählt aus Sorbitpolyglycidylethern, Polyglycerinpolyglycidylethern und Pentaerythritpolyglycidylethern, Isocyanatverbindungen, methylolgruppenhaltigen Verbindungen, aktives Methylen enthaltenden Verbindungen und Imidverbindungen, mit einer organischen Verbindung (B), die ein Aminosilan ist, erhalten wurde,
wobei, wenn das Metallion ein Zr-Ion, ein Ti-Ion, ein Hf-Ion oder ein Ce-Ion ist, der Fall ausgeschlossen ist, in dem die metallische Verbindung (C) ein kolloidales Dispersoid ist, und
wobei die organische Verbindung (A), die eine funktionelle Gruppe (I) aufweist, und die organische Verbindung (B), die eine funktionelle Gruppe (II), die in der Lage ist, mit der funktionellen Gruppe (I) zu reagieren, und zumindest eine hydrophile funktionelle Gruppe (III), ausgewählt aus Hydroxylgruppen, die sich von denen unterscheiden, die in den nachstehenden funktionellen Gruppen (a) enthalten sind, primären, sekundären und tertiären Aminogruppen, quarternären Ammoniumgruppen, Phosphorsäuregruppen, Phosphonsäuregruppen, Sulfonsäuregruppen, primären Amidogruppen, sekundären Amidogruppen und Polyoxyethylenketten, aufweist, wobei alle diese Gruppen und Ketten sich von denen unterscheiden, die in den funktionellen Gruppen (I) und/oder den funktionellen Gruppen (II) enthalten sind, kompoundiert sind, und zumindest eine der organischen Verbindung (A) und der organischen Verbindung (B) eine organische Silanverbindung ist, die eine funktionelle Gruppe (a) aufweist.

2. Oberflächenbehandlungsmittel gemäss Anspruch 1, wobei in der organischen Verbindung (A), die Epoxysilane aus 3-Glycidyloxypropyltrimethoxysilan, 3-Glycidyloxypropylmethyldimethoxysilan und 2-(3,4-Epoxycyclohexyl)ethyltrimethoxysilan ausgewählt sind; die Aminosilane aus N-(2-Aminoethyl)-3-aminopropylmethyldimethoxysilan, N-(Aminoethyl)-3-aminopropyltrimethoxysilan und 3-Aminopropyltriethoxysilan ausgewählt sind; das Mercaptosilan 3-Mercaptopropyltrimethoxysilan ist; die Isocyanatsilane aus 3-Isocyanatpropyltrimethoxysilan und 3-Isocyanatpropyltriethoxysilan ausgewählt sind; die vinylgruppenhaltigen Silane aus Vinyltriethoxysilan und p-Styryltrimethoxysilanausgewählt sind; die Isocyanatverbindungen aus Tolylendiisocyanat, Diphenylmethandiisocyanat, Naphthalindiisocyanat und Xylylendiisocyanat ausgewählt sind; die methylolgruppenhaltigen Verbindungen aus Melamin und Dimethylolpropionsäure ausgewählt sind; die aktives Methylen enthaltende Verbindung Acetoacetoxyacrylat ist und die Imidoverbindung N,N'-Isopropylcarbodiimid ist; und in der organischen Verbindung (B) die Aminosilane aus N-(2-Aminoethyl)-3-aminopropylmethyldimethoxysilan, N-(Aminoethyl)-3-aminopropyltrimethoxysilan und 3-Aminopropyltriethoxysilan ausgewählt sind.

3. Oberflächenbehandlungsmittel gemäss Anspruch 1 oder Anspruch 2, wobei das zwei- oder mehrwertige Metallion zumindest eines, ausgewählt aus Ti-, Zr-, Hf-, V-, Mg-, Mn-, Zn-, W-, Mo-, Al-, Ni-, Co-, Ce- und Ca-Ionen, ist.

4. Oberflächenbehandlungsmittel gemäss einem der vorhergehenden Ansprüche, wobei das Masseverhältnis des Gehalts an metallischer Verbindung (C) zu dem Gehalt an von der funktionellen Gruppe (a) abgeleitetem Si in einer von dem Oberflächenbehandlungsmittel erhaltenen Beschichtung, (C)/Si, 0,01 zu 10,0 beträgt.

5. Oberflächenbehandlungsmittel gemäss einem der vorhergehenden Ansprüche, wobei zumindest eine Säure (D), ausgewählt aus Fluorwasserstoffsäure, organischen Säuren und Phosphorsäure, kompoundiert ist.

6. Oberflächenbehandlungsmittel gemäss Anspruch 5, wobei das Masseverhältnis des Gehalts an Säure (D) zu dem Gehalt an von der funktionellen Gruppe (a) stammendem Si in einer von dem Oberflächenbehandlungsmittel erhaltenen Beschichtung, (D)/Si, 0,01 bis 10,0 beträgt.

7. Oberflächenbehandlungsmittel gemäss einem der vorhergehenden Ansprüche, wobei eine kolloidale Dispersion (E) der einfachen Subtanz oder Verbindung aus zumindest einem Element, ausgewählt aus Si, Zr, Ti, Sn, Hf, Ce und Nb, kompoundiert ist.

8. Verfahren zur Oberflächenbehandlung eines metallischen Materials, das das Aufbringen des Oberflächenbehandlungsmittel gemäss einem der vorhergehenden Ansprüche auf die Oberfläche eines metallischen Materials und Trocknen des resultierenden Oberflächenbehandlungsmittels umfasst, um eine Beschichtung von 10 bis 3.000 mg/m², bezogen auf SiO₂, zu bilden.

9. Metallisches Material, das nach dem Verfahren gemäss Anspruch 8 behandelt ist.

## Revendications

1. Agent de traitement de surface de métal aqueux, dans lequel un composé de silicium organique qui a, dans une molécule, deux groupes fonctionnels (a) ou plus représentés par la formule -SiR¹R²R³, où R¹, R² et R³ représentent des groupes alkyle, des groupes alcoxy et des groupes hydroxyle mutuellement indépendants, et au moins l'un d'entre eux est un groupe alcoxy, et au moins un groupe fonctionnel hydrophile (b) choisi parmi des groupes hydroxyle, qui sont différents de ceux qui peuvent être contenus dans les groupes fonctionnels (a), et des groupes amino, et a un poids moléculaire, par groupe fonctionnel (b), de 100 à 10 000, et un composé métallique (C) contenant un ion métallique bivalent ou plus, sont mélangés, agent de traitement de surface métallique aqueux dans lequel le composé de silicium organique est un composé obtenu en faisant réagir un composé organique (A) choisi parmi les époxysilanes, les aminosilanes, les mercaptosilanes, les isocyanatosilanes, les silanes comprenant un groupe vinyle, les composés époxy choisis parmi les poly(éthers de glycidyle) de sorbitol, les poly(éthers de glycidyle) de polyglycérol et les poly(éthers de glycidyle) de pentaérythritol, les composés d'isocyanate, les composés contenant un groupe méthylol, les composés contenant du méthylène actif et les composés imido avec un composé organique (B) qui est un aminosilane,
dans lequel, lorsque l'ion métallique est un ion Zr, un ion Ti, un ion Hf ou un ion Ce, le cas où le composé métallique (C) est une matière dispersée colloïdale est exclu, et
dans lequel le composé organique (A) ayant un groupe fonctionnel (I) et le composé organique (B) ayant un groupe fonctionnel (II) capable de réagir avec le groupe fonctionnel (I) et au moins un groupe fonctionnel hydrophile (III) choisi parmi des groupes hydroxyle, qui sont différents de ceux qui peuvent être contenus dans les groupes fonctionnels suivants (a), des groupes amino primaires, secondaires et tertiaires, des groupes ammonium quaternaire, des groupes d'acide phosphorique, des groupes acide phosphonique, des groupes acide sulfonique, des groupes amido primaires, des groupes amido secondaires et des chaînes de polyoxyéthylène, tous ces groupes et ces chaînes étant différents de ceux inclus dans les groupes fonctionnels (I) et/ou dans les groupes fonctionnels (II) sont mélangés, et au moins l'un du composé organique (A) et du composé organique (B) est un composé de silane organique ayant le groupe fonctionnel (a).

2. Agent de traitement de surface selon la revendication 1, dans lequel, dans le composé organique (A), les époxysilanes sont choisis parmi les suivants : 3-glycidyloxypropyltriméthoxysilane, 3-glydicyloxypropylméthyldiméthoxysilane et 2-(3,4-époxycyclohexyl)éthyltriméthoxysilane ; les aminosilanes sont choisis parmi les suivants : N-(2-aminoéthyl)-3-aminopropylméthyldiméthoxysilane, N-(aminoéthyl)-3-aminopropyltriméthoxysilane et 3-aminopropyltriéthoxysilane ; le mercaptosilane est le 3-mercaptopropyltriméthoxysilane ; les isocyanatosilanes sont choisis parmi le 3-isocyanatopropyltriméthoxysilane et le 3-isocyanatopropyltriéthoxysilane ; les silanes contenant un groupe vinyle sont choisis parmi le vinyltriéthoxysilane et le p-styryltriméthoxysilane ; les composés d'isocyanate sont choisis parmi le diisocyanate de tolylène, le diisocyanate de diphénylméthane, le diisocyanate de naphtalène et le diisocyanate de xylylène ; les composés contenant un groupe méthylol sont choisis parmi la mélamine et l'acide diméthylolpropionique ; le composé contenant du méthylène actif est l'acrylate d'acétoacétoxy ; et le composé imido est le N,N'-isopropylcarbodiimide, et, dans le composé organique (B), les aminosilanes sont choisis parmi N-(2-aminoéthyl)-3-aminopropylméthyldiméthoxysilane, N-(aminoéthyl)-3-aminopropyltriméthoxysilane et 3-aminopropyltriéthoxysilane.

3. Agent de traitement de surface selon la revendication 1 ou la revendication 2, dans lequel l'ion métallique bivalent ou plus est au moins un choisi parmi Ti, Zr, Hf, V, Mg, Mn, Zn, W, Mo, Al, Ni, Co, Ce et Ca.

4. Agent de traitement de surface selon l'une quelconque des revendications précédentes, dans lequel le rapport massique du contenu du composé métallique (C) au contenu de Si tiré du groupe fonctionnel (a), dans un revêtement obtenu à partir de l'agent de traitement de surface, (C)/Si, est de 0,01 à 10,0.

5. Agent de traitement de surface selon l'une quelconque des revendications précédentes, dans lequel au moins un acide (D) choisi parmi l'acide fluorhydrique, les acides organiques et l'acide phosphorique est mélangé.

6. Agent de traitement de surface selon la revendication 5, dans lequel le rapport massique du contenu de l'acide (D) au contenu de Si tiré du groupe fonctionnel (a), dans un revêtement obtenu à partir de l'agent de traitement de surface, (D)/Si, est de 0,01 à 10,0.

7. Agent de traitement de surface selon l'une quelconque des revendications précédentes, dans lequel une dispersion colloïdale (E) de la substance simple ou d'un composé d'au moins un élément choisi parmi Si, Zr, Ti, Sn, Hf, Ce et Nb est mélangée.

8. Procédé de traitement de surface d'un matériau métallique qui comprend l'application de l'agent de traitement de surface selon l'une quelconque des revendications précédentes sur la surface du matériau métallique, et le séchage de l'agent de traitement de surface obtenu pour former un revêtement de 10 à 3 000 mg/m² en termes de SiO₂.

9. Matériau métallique traité en surface par le procédé selon la revendication 8.
